(19) Europäisches Patentamt
European Patent Office
Office européen des brevets

(11) **EP 3 978 327 A1**

(12) **EUROPEAN PATENT APPLICATION**
published in accordance with Art. 153(4) EPC

(43) Date of publication:
**06.04.2022 Bulletin 2022/14**

(21) Application number: **20813088.0**

(22) Date of filing: **18.05.2020**

(51) International Patent Classification (IPC):
***B60W 30/16*** *(2020.01)* ***B60W 50/10*** *(2012.01)*

(52) Cooperative Patent Classification (CPC):
**B60W 30/16; B60W 50/10**

(86) International application number:
**PCT/JP2020/019582**

(87) International publication number:
**WO 2020/241335 (03.12.2020 Gazette 2020/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.05.2019 JP 2019097299**

(71) Applicant: **Hitachi Astemo, Ltd.**
**Hitachinaka-shi Ibaraki 312-8503 (JP)**

(72) Inventor: **TAKAHAMA, Taku**
**Hitachinaka-shi, Ibaraki 312-8503 (JP)**

(74) Representative: **Hoefer & Partner Patentanwälte mbB**
**Pilgersheimer Straße 20**
**81543 München (DE)**

(54) **VEHICLE CONTROL DEVICE, VEHICLE CONTROL METHOD, AND VEHICLE CONTROL SYSTEM**

(57) The vehicle control device includes a control unit that performs a calculation, based on input information, for changing at least one of a target vehicle speed of the vehicle and a target inter-vehicle interval between the vehicle and the preceding vehicle traveling in front of the vehicle. The control unit changes at least one of the target vehicle speed and the target inter-vehicle interval depending on input information relating to following of the preceding vehicle and input information relating to a way of operating an adjusting unit by the passenger of the vehicle, and outputs a control command for controlling a braking/driving device that breaks or drives the vehicle so as to achieve the changed target vehicle speed or the changed target inter-vehicle interval.

FIG.1

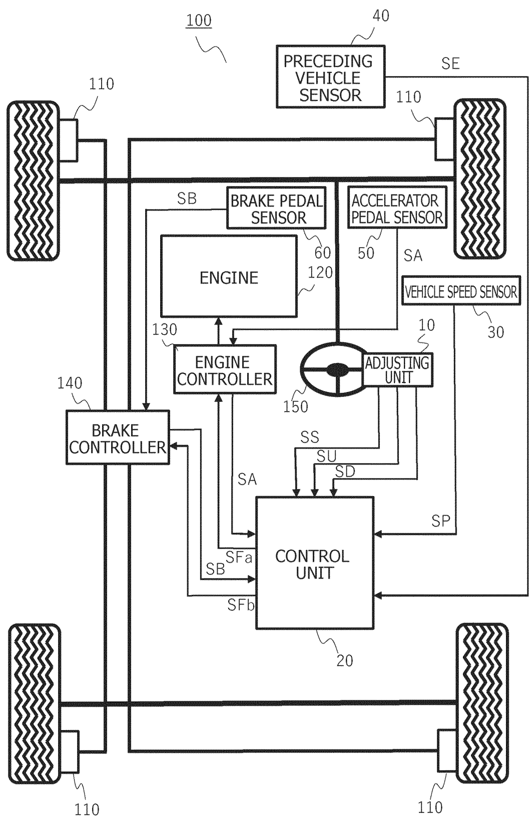


EP 3 978 327 A1

## Description

### TECHNICAL FIELD

The present invention relates to a vehicle control device, a vehicle control method, and a vehicle control system that control a vehicle speed and an inter-vehicle interval in response to operation of an adjusting unit by a vehicle passenger and information relating to following of a preceding vehicle.

### BACKGROUND ART

Conventionally, there is known Adaptive Cruise Control (hereinafter abbreviated as ACC) which acts as follows: the presence/absence of a preceding vehicle is detected by radar, camera, or the like; if a preceding vehicle is detected, speed control is performed so as to maintain a predetermined inter-vehicle distance below a predetermined upper limit speed set in advance; and if no preceding vehicle is detected, the speed control is performed so as to maintain the predetermined upper limit speed set in advance (see, for example, Patent Document 1).

### REFERENCE DOCUMENT LIST

### PATENT DOCUMENT

Patent Document 1: JP 2002-178787 A

### SUMMARY OF THE INVENTION

### PROBLEM TO BE SOLVED BY THE INVENTION

In this kind of ACC, in addition to the main switch for switching on/off of the system, a plurality of manually operable switches are generally used to set targets of the vehicle speed and the inter-vehicle interval. Examples are a set switch that sets the current traveling speed of the vehicle to a predetermined upper limit speed, an acceleration switch that increases the currently set predetermined upper limit speed, a deceleration switch that decreases the currently set predetermined upper limit speed, and an inter-vehicle interval setting switch that sets the inter-vehicle distance.

However, since it is necessary to operate a large number of switches many times at the time of setting the vehicle speed and the inter-vehicle interval, the switch operation of a passenger of the vehicle is complicated and difficult to understand. In addition, even if an attempt is made to quickly cause the vehicle behavior to react after merging or lane change, it is difficult to directly convey the intention of the passenger, such as acceleration, deceleration, and decrease and increase of inter-vehicle interval, to the vehicle, which may create discomfort.

The present invention has been made in view of the above circumstances, and an object of the present invention is to provide a vehicle control device, a vehicle control method, and a vehicle control system capable of making a switch operation by a vehicle passenger intuitive and readily understandable, and capable of directly conveying the intention of the passenger to suppress discomfort.

### MEANS FOR SOLVING THE PROBLEM

According to one aspect of the present invention, there is provided a vehicle control device, comprising a control unit that performs a calculation, based on input information, for changing at least one of a target vehicle speed of a vehicle and a target inter-vehicle interval between the vehicle and a preceding vehicle traveling in front of the vehicle, wherein the control unit: changes at least one of the target vehicle speed and the target inter-vehicle interval depending on input follow-up information relating to following of the preceding vehicle and input operation information relating to a way of operating an adjusting unit by a passenger of the vehicle; and outputs a control command for controlling a braking/driving device to achieve the changed target vehicle speed or the changed target inter-vehicle interval, the braking/driving device breaking or driving the vehicle.

In addition, according to another aspect of the present invention, there is provided a vehicle control method for changing at least one of a target vehicle speed of a vehicle and a target inter-vehicle interval between a vehicle and a preceding vehicle traveling in front of the vehicle based on input information, the method comprising: changing at least one of the target vehicle speed and the target inter-vehicle interval depending on obtained information relating to following of the preceding vehicle and obtained information relating to a way of operating an adjusting unit by a passenger of the vehicle; and outputting a control command for controlling a braking /driving device to achieve the changed target vehicle speed or the changed target inter-vehicle interval, the braking /driving device breaking or driving the vehicle.

Furthermore, according to another aspect of the present invention, there is provided a vehicle control system comprising: an adjusting unit with which a passenger adjusts at least one of a target vehicle speed of a vehicle and a target inter-vehicle interval between the vehicle and a preceding vehicle traveling in front of the vehicle; a control unit that changes at least one of the target vehicle speed and the target inter-vehicle interval depending on input information relating to following of the preceding vehicle and input information relating to a way of operating the adjusting unit by the passenger of the vehicle and outputs a control command for achieving the changed target vehicle speed or the changed target inter-vehicle interval; and a braking/driving device that obtains the control command output from the control unit, and breaks or drives the vehicle based on the control command.

EFFECTS OF THE INVENTION

In the present invention, at least one of the target vehicle speed and the target inter-vehicle interval is changed depending on the information relating to the way of operating the adjusting unit by the passenger of the vehicle and the information relating to following of the preceding vehicle. The passenger of the vehicle can control the vehicle speed and the inter-vehicle interval depending on the way of operating the adjusting unit, so that the switch operation can be intuitive and readily understandable. In addition, the intention of the passenger such as acceleration, deceleration, and decrease and increase of the inter-vehicle interval can be directly conveyed to the vehicle depending on the way of operating the adjusting unit, so that the vehicle can quickly react. Thus, it is possible to suppress discomfort for the passenger.

BRIEF DESCRIPTION OF THE DRAWINGS

FIG. 1 is a schematic diagram of a vehicle control system according to an embodiment of the present invention.
FIG. 2 explains a vehicle control device according to the embodiment of the present invention, and is a block diagram in which main parts relating to the vehicle control device in FIG. 1 is extracted and illustrated in detail.
FIG. 3A is a schematic diagram illustrating a configuration example of an adjusting unit in the vehicle control device of FIG. 2.
FIG. 3B is a schematic diagram illustrating another configuration example of the adjusting unit in the vehicle control device of FIG. 2.
FIG. 4 is a diagram for explaining a target setting based on a relationship between traveling situations and ways of pressing an up button and a down button, in the vehicle control device of FIG. 2.
FIG. 5 is a timing chart illustrating a relationship of an example of button operation with an acceleration command, a target vehicle speed and a target inter-vehicle interval, in the vehicle control device of FIG. 2.
FIG. 6 is a flowchart for explaining a vehicle control method according to a first embodiment of the present invention.
FIG. 7 is a flowchart illustrating processes following FIG. 6.
FIG. 8 is a flowchart illustrating processes following FIG. 7.
FIG. 9 is a flowchart illustrating processes following FIG. 8.
FIG. 10 is a flowchart for explaining a vehicle control method according to a second embodiment of the present invention.
FIG. 11 is a flowchart illustrating processes following FIG. 10.
FIG. 12 is a flowchart illustrating processes following FIG. 11.
FIG. 13 is a flowchart illustrating processes following FIG. 12.
FIG. 14 is a flowchart illustrating processes following FIG. 13.

MODE FOR CARRYING OUT THE INVENTION

Hereinafter, embodiments of the present invention will be described with reference to the drawings.
FIG. 1 illustrates a schematic configuration of a vehicle control system according to an embodiment of the present invention. This vehicle control system includes an adjusting unit 10, a control unit 20, a vehicle speed sensor 30, a preceding vehicle sensor 40, an accelerator pedal sensor 50, and a brake pedal sensor 60.
In this example, adjusting unit 10 is installed on a steering wheel 150 and is adjusted by the operation of the driver's hand, for example, the thumb or the index finger. (It would be the driver who operates in this description, but it is not limited to the driver, and a passenger of a vehicle may operate.) Adjusting unit 10 includes: a system switch that acts as a main switch for switching ACC on/off; an up button that acts as an acceleration adjusting unit (for example, a push button type up switch); and a down button that acts as a deceleration adjusting unit (for example, a push button type down switch). A support request signal SS generated by the system switch, an acceleration command SU generated by the up button, and a deceleration command SD generated by the down button each are supplied to control unit 20.

Vehicle speed sensor 30 obtains the traveling speed of vehicle 100 from the rotation of the tires and outputs a vehicle speed signal SP to control unit 20. Preceding vehicle sensor 40 recognizes the situation of the outside by image recognition, to detect the distance and the relative speed to the preceding vehicle (or the vehicle traveling in front, which is referred to as the preceding vehicle in the present embodiment) in the own vehicle lane. Then, preceding vehicle sensor 40 outputs signal SE indicating the presence/absence of the preceding vehicle of vehicle 100 and the inter-vehicle interval to the preceding vehicle (follow-up information relating to following of the preceding vehicle), to control unit 20.

Accelerator pedal sensor 50 detects the opening degree of the accelerator pedal with which the driver accelerates the own vehicle in normal traveling, and outputs a detection signal SA to an engine controller 130. Brake pedal sensor 60 detects the brake pedal position/pressure for decelerating the own vehicle, and outputs a detection signal SB to a brake controller 140. Detection signal SA is input to control unit 20 via engine controller 130, and detection signal SB is input to control unit 20 via brake controller 140.

Control unit 20 controls a braking/driving device that breaks or drives vehicle 100, and performs a calculation, based on the various input information, for changing at least one of a target vehicle speed of vehicle 100 and a target inter-vehicle interval to the preceding vehicle traveling in front of vehicle 100. Specifically, control unit 20 changes the target vehicle speed and the target inter-vehicle interval depending on follow-up information SE relating to following of the preceding vehicle input from preceding vehicle sensor 40, and operation information relating to the way in which adjusting unit 10 is operated by the passenger of vehicle 100 (acceleration command SU, deceleration command SD). Then, control unit 20 outputs a control command (braking/driving command SF) for controlling the braking/driving device so as to achieve the changed target vehicle speed or the target inter-vehicle interval.

Here, the braking/driving device means a device that combines a braking function and a driving function, such as a braking device (including a brake 110 or a motor regeneration) and a driving device (including an engine 120, or a motor). That is, control unit 20 outputs braking/driving command SF (driving command SFa, and braking command SFb) respectively to engine controller 130 that controls engine 120 and brake controller 140 that controls brake 110, to support the driver in driving vehicle 100 to achieve the target vehicle speed or the target inter-vehicle interval.

FIG. 2 extracts and illustrates the main parts relating to vehicle control device in FIG. 1 in detail. Control unit 20 includes a travel support controller 21 and a VMC (Vehicle Motion Controller) 22. Travel support controller 21 is configured with: a calculation unit 23 that calculates the target inter-vehicle interval and the target vehicle speed; a processing unit 24 that performs processes for inter-vehicle interval control and vehicle speed control; and the arbitration unit 25 that arbitrates the control amount output from calculation unit 23 and processing unit 24 to output the resultant to VMC 22.

Calculation unit 23 of travel support controller 21 receives each input of: vehicle speed signal SP from vehicle speed sensor 30; signal SE, from preceding vehicle sensor 40, indicating the presence/absence of the preceding vehicle and the inter-vehicle interval to the preceding vehicle; ACC on/off signal (support request signal SS) from the system switch 11 of adjusting unit 10; the information relating to the way of operating, from up button 12 (acceleration command SU); the information relating to the way of operating, from down button 13 (deceleration command S); detection signal SA of the opening degree of the accelerator pedal, from accelerator pedal sensor 50; and detection signal SB of the brake pedal position/pressure, from the brake pedal, to calculate the target inter-vehicle interval and the target vehicle speed.

In addition, processing unit 24 receives the inputs of: vehicle speed signal SP from vehicle speed sensor 30; and signal SE, from preceding vehicle sensor 40, indicating the presence/absence of the preceding vehicle and the inter-vehicle interval to the preceding vehicle, to calculate an acceleration command for inter-vehicle interval control and vehicle speed control based on the target inter-vehicle interval and target vehicle speed calculated by calculation unit 23 and the information detected by vehicle speed sensor 30 and preceding vehicle sensor 40.

Then, arbitration unit 25 arbitrates the control amount as the final travel support system and outputs the target acceleration to VMC 22. VMC 22 calculates the command values of an engine system 160 and a brake system 170 from the input control amount and the vehicle state, and outputs a driving command SFa and a braking command SFb respectively to engine controller 130 and brake controller 140 so as to achieve the target acceleration, to control the actuators of engine system 160 and brake system 170.

FIG. 3A illustrates a configuration example of adjusting unit 10. Adjusting unit 10 is installed on steering wheel 150, and is configured with, for example, a system switch 11 operable by a thumb or index finger, and a pair of buttons (up button 12 and down button 13) arranged so as to sandwich system switch 11 in the vertical direction.

Alternatively, as illustrated in FIG. 3B, up button 12 and down button 13 may be arranged adjacent to each other, and system switch 11 may be installed at a distant position.

System switch 11 of adjusting unit 10 instructs the start and end of operation of the travel support, and generates a support request signal SS to output the signal to travel support controller 21. System switch 11 determines on/off of what is called "automatic driving level 2" function. Travel support controller 21 acquires operation information, for example, information relating to time from adjusting unit 10, and performs control to change the target vehicle speed and the target inter-vehicle interval.

Up button 12 outputs operation information (acceleration command SU) relating to the way of operating to travel support controller 21 of control unit 20, and sets the control target of the travel support system on the acceleration side. Up button 12 changes the control of the braking/driving device by control unit 20, for example, depending on the length of the pressing time and the presence/absence of the preceding vehicle. In addition, similarly to up button 12, down button 13 also outputs operation information (deceleration command SD) relating to the way of operating to travel support controller 21 of control unit 20, and sets the control target of the travel support system on the deceleration side. Down button 13 also changes the control of the braking/driving device by control unit 20, depending on, for example, the length of the pressing time and the presence/absence of the preceding vehicle.

In this way, the buttons at positions that can be operated with the thumb or index finger can be seen in the normal steering holding state, so that they are readily understandable. In addition, the buttons, which mean the operations on the acceleration side and the deceleration side, are arranged across or adjacent to the main switch that switches the system on/off. This makes them readily understandable and allows eliminating mistakes since the vehicle behaviors have no difference between the acceleration side and the deceleration side though the action of the button differs depending on the control state.

FIG. 4 illustrates a summary of the target setting, depending on the relationship between the traveling situations and ways of pressing the up/down button.

When it is detected that the inter-vehicle time or inter-vehicle distance is greater than a predetermined threshold value and the preceding vehicle is absent or far away based on the follow-up information which relates to following of the preceding vehicle, pressing up button 12 for a short time (short pressing) increases the target vehicle speed by a predetermined vehicle speed (for example, +5 km/h). On the other hand, when it is detected that the inter-vehicle time or the inter-vehicle distance is equal to or smaller than the predetermined threshold value and the vehicle is following the preceding vehicle based on the follow-up information, pressing the button for a short time decreases the target inter-vehicle time or the target inter-vehicle distance by a predetermined inter-vehicle interval (for example, -0.1 s).

On the other hand, when it is detected that the inter-vehicle interval between vehicle 100 and the preceding vehicle is greater than a predetermined threshold value based on the follow-up information, pressing up button 12 for a time equal to or longer than a predetermined time (long pressing) outputs a command for acceleration by a predetermined amount (0.15 G acceleration) to the braking/driving device, and changes the target vehicle speed to the vehicle speed at the end of the operation of adjusting unit 10.

In contrast, when it is detected that the inter-vehicle interval between vehicle 100 and the preceding vehicle is equal to or smaller than the predetermined threshold value based on the follow-up information, the long pressing outputs a command for acceleration by the predetermined amount (0.15 G acceleration) to the braking/driving device, and changes the target inter-vehicle interval to the vehicle speed at the end of the operation of adjusting unit 10.

When it is detected that the inter-vehicle time or inter-vehicle distance is greater than the predetermined threshold value and the preceding vehicle is absent or far away based on the follow-up information which relates to following of the preceding vehicle, down button 13 decreases the target vehicle speed by a predetermined vehicle speed (for example, -5 km/h). On the other hand, when it is detected that the inter-vehicle time or the inter-vehicle distance is equal to or smaller than the predetermined threshold value and the vehicle is following the preceding vehicle based on the follow-up information, down button 13 increases the target inter-vehicle time or the target inter-vehicle distance by a predetermined inter-vehicle interval (for example, +0.1 s).

On the other hand, when it is detected that the inter-vehicle interval between vehicle 100 and the preceding vehicle is greater than the predetermined threshold value based on the follow-up information, pressing down button 13 for a time equal to or longer than the predetermined time (long pressing) outputs a command for deceleration by a predetermined amount (0.15 G deceleration) to the braking/driving device, and changes the target vehicle speed to the vehicle speed at the end of the operation of adjusting unit 10.

In contrast, when it is detected that the inter-vehicle interval between vehicle 100 and the preceding vehicle is equal to or smaller than the predetermined threshold value based on the follow-up information, the long pressing outputs a command for deceleration by the predetermined amount (0.15 G deceleration) to the braking/driving device, and changes the target inter-vehicle interval to the inter-vehicle interval at the end of the operation of adjusting unit 10.

As described above, the target vehicle speed and the target inter-vehicle interval are controlled depending on the presence/absence of the preceding vehicle (or the length of the inter-vehicle distance) and the length of the pressing time of up button 12 and down button 13. This can reduce the number of buttons requiring operation to two: acceleration and deceleration, and allows them to be intuitive and readily understandable. In addition, when a quick reaction is required, it is easy to directly convey the intention of the passenger such as acceleration and deceleration, and decrease and increase of the inter-vehicle interval. Thus, it is possible to suppress discomfort for the driver. Furthermore, repeated short pressing of up button 12 and down button 13 allows the target vehicle speed to be set in units of 5 km, or allows the target inter-vehicle interval to be set in units of 0.1 s, which also allows fine target setting to be readily performed.

Note that, in FIG. 4, the acceleration in long pressing of the up button and down button is constant, but the control may be performed so that the acceleration feeling is constant.

FIG. 5 illustrates an example of the operation in the vehicle control device of FIG. 2, and is a timing chart illustrating relationship among the button operation of up button 12 and down button 13, the acceleration command, the target vehicle speed, and the target inter-vehicle interval. When the driver strongly (long) presses up button 12 down at timing t1 because of a strong desire to accelerate in a hurry, an acceleration command is directly output from VMC22 at the timing t2 having a slight delay due to the arithmetic processing of travel support controller 21, and the vehicle speed increases. Since the acceleration generated by long pressing is an acceleration command close to a square wave, the behavior of vehicle 100 changes responsively. Therefore, when the driver wants to accelerate in a hurry, the response according to the intention can be quickly performed. Thus, it is possible to suppress discomfort for the driver.

When the driver releases up button 12 at the timing t3, the preceding vehicle is absent in the example of FIG. 5, so that the vehicle speed at the time of release is set to a new target vehicle speed.

At timing t4, when down button 13 is pressed down for a short time for a little deceleration to keep the legal speed, the deviation from the target vehicle speed is small, so that a small deceleration command is issued (timing t5). Therefore, the acceleration/deceleration is gentle in consideration of the ride quality, and the vehicle speed can be controlled with priority to the ride quality.

Note that the target vehicle speed is set in 5 km/h increments for pressing up button 12 and down button 13 for a short time, but, at the time of the first pressing, the acceleration/deceleration is not performed by 5 km/h but by the speed that is insufficient in 5 km/h increments. For example, if up button 12 is pressed for a short time to accelerate during travel at 49 km per hour, the vehicle is accelerated to 50 km per hour, and thereafter to 55 km/h and 60 km/h. On the other hand, similarly, when down button 13 is pressed for a short time to decelerate during travel at 49 km per hour, the vehicle is decelerated to 45 km per hour, and thereafter, to 40 km/h and 35 km/h. Since the legal speed is usually set in units of 10 km/h, the target vehicle speed can be readily set to the legal speed.

When the vehicle catches up with a distant preceding vehicle at timing t6, the inter-vehicle interval is controlled to the initial set value of the target inter-vehicle interval. When the up button 12 is pressed for a short time at the timing t7 in order to narrow the initial inter-vehicle interval setting (to prevent another vehicle from cutting in front), an acceleration command, issued at timing t8, increases the vehicle speed so that the vehicle is controlled to a narrowed target inter-vehicle interval.

On the other hand, when long pressing of down button 13 is performed at timing t9 to widen the inter-vehicle interval, a deceleration command is issued through the timing t10-t11 when down button 13 is held pressed, so that the vehicle speed is reduced, and the vehicle is controlled to maintain the inter-vehicle interval at the timing t11 when down button 13 is released. When increase of the inter-vehicle interval is desired, long pressing of down button 13 generates a constant deceleration just that long, so that the inter-vehicle interval can be increased fast, and can be set according to the driver's preference. In this way, the inter-vehicle interval can be set according to the driver's preference in response to the pressing time of down button 13.

Next, the vehicle control method according to a first embodiment of the present invention will be described in detail with reference to the flowcharts of FIGS. 6 to 9.

The first embodiment is an example of a traveling control method of vehicle 100 based on vehicle speed control and inter-vehicle time control (which may be inter-vehicle distance control) in a general cruise control system. Setting the target values for the vehicle speed control and the inter-vehicle time control in the following steps S101 to S135 improves usability and suppress discomfort. The processes of steps S101 to S135 are executed, for example, in a cycle of 50 ms. And compared to a cruise control system with a large number of buttons and complicated button operation, the method is capable of suppressing discomfort and fine control set of the driver with understandability of the button operation.

First, step S101 is executed for reading the behavior (vehicle information) such as the vehicle speed, which is the traveling speed of the own vehicle, and the acceleration, which is the change thereof.

Step S102 is executed for reading the distance, relative speed, and the like to the preceding vehicle traveling in the own vehicle lane, from the camera mounted on the own vehicle.

The next step S103 is executed for reading the driver's operation information of the own vehicle including: the operation state of up button 12 or down button 13 installed on steering wheel 150; the operation state of system switch (on/off button) 11 of the travel support control; and the operation state of the accelerator pedal or the brake pedal taken by accelerator pedal sensor 50 or brake pedal sensor 60.

In step S104, if it is detected that the button operation is pressing up button 12 for a short time, for example, less than 0.3 s, based on the driver's operation information read in step S103, the process proceeds to step S105, and if not, the process proceeds to step S109.

In the following step S105, the following variable is set and the process proceeds to step S106.

Long pressing acceleration = 0 G

Here, the long pressing acceleration is an acceleration command value for achieving a strong demand for acceleration/deceleration, which is expressed by the driver's long pressing up button 12 or down button 13 at steering wheel 150, and the method of use thereof will be described in step S132.

In step S106, if it is detected that the vehicle is not currently following the preceding vehicle, that is, the preceding vehicle is absent or the inter-vehicle distance to the preceding vehicle is equal to or longer than the predetermined distance, based on the preceding vehicle information read in step S102, the process proceeds to step S107, and if not, the process proceeds to step S108.

Here, the distance equal to or longer than the predetermined distance is a distance corresponding to, for example, an inter-vehicle time of 2.5 to 3 s with the preceding vehicle at the vehicle speed of the own vehicle read in step S101.

In the next step S107, the following variable is set, and the process proceeds to step S128.

Target vehicle speed = target vehicle speed + 5km/h

Here, the target vehicle speed is the target value of the traveling speed of the own vehicle, and it is set to addition (= target for accelerating the own vehicle), for example, when the restriction in which it is within 0 to 120 km/h is satisfied.

In the next step S108, the following variable is set, and the process proceeds to step S128.

Target inter-vehicle interval = target inter-vehicle interval - 0.1 s

Here, the target inter-vehicle interval is "the target value of inter-vehicle time = inter-vehicle distance/vehicle speed" with the preceding vehicle, and it is set to subtraction (= target for approaching the preceding vehicle), in other words, the target for acceleration, for example, when the restriction in which it is within 1.0 to 2.5 s is satisfied.

In step S109, if it is detected that the button operation keeps pressing up button 12 for a long time, for example, 0.3 s or longer, based on the driver's operation information read in step S103, the process proceeds to step S110, and if not, the process proceeds to step S111.

In the next step S110, the following variable is set and the process proceeds to step S128.

Long pressing acceleration = +0.15 G

Here, the command value for acceleration is set to 0.15G, which means the value is set so that the driver can predict the vehicle behavior. For example, the value is set to a constant value or it is set so that it brings a constant acceleration feeling (for example, the higher the speed is, the more the value is lowered down to about +0.07 G from +0.15 G).

However, using a setting mode or the like that reflects the driver's preference, the acceleration feeling may be changed to a preferable value instead of permanently constant value of +0.15 G if the vehicle is stopped.

In this way, setting the command value to a value greater than the normal control command allows the driver's intention of acceleration/deceleration to be firmly reflected.

In step S111, if it is detected that there is no button operation this time and the button operation up to the last time is pressing up button 12 for a long time based on the driver's operation information read in step S103, the process proceeds to step S112.

In step S112, the following variable is set and the process proceeds to step S113.

Long pressing acceleration = 0 G

In step S113, the same processing as in step S106 is performed. That is, if the preceding vehicle information read in step S102 indicates that the vehicle is not currently following the preceding vehicle, that is, that the preceding vehicle is absent or the inter-vehicle distance to the preceding vehicle is equal to or longer than the predetermined distance, the process proceeds to step S114, and if not, the process proceeds to step S115.

In step S114, the following variable is set, and the process proceeds to step S128.

$$\text{Target vehicle speed} = \text{current traveling vehicle speed}$$

In step S115, the following variable is set, and the process proceeds to step S128.

$$\text{Target inter-vehicle interval} = \text{current inter-vehicle time with the preceding vehicle}$$

In step S116, if it is detected that the button operation is pressing down button 13 for a short time, for example, less than 0.3 s, based on the driver's operation information read in step S103, the process proceeds to step S117, and if not, the process proceeds to step S121.

In step S117, the following variable is set and the process proceeds to step S118.

$$\text{Long pressing acceleration} = 0\ \text{G}$$

In the next step S118, if the preceding vehicle information read in step S102 indicates that the vehicle is not currently following the preceding vehicle, that is, that preceding vehicle is absent or the inter-vehicle distance to the preceding vehicle is equal to or longer than the predetermined distance, the process proceeds to step S119, and if not, the process proceeds to step S120.

In step S119, the following variable is set, and the process proceeds to step S128.

$$\text{Target vehicle speed} = \text{target vehicle speed} - 5\ \text{km/h}$$

In step S120, the following variable is set, and the process proceeds to step S128.

$$\text{Target inter-vehicle interval} = \text{target inter-vehicle interval} + 0.1\ \text{s}$$

In step S121, if it is detected that the button operation keeps pressing up button 12 for a long time, for example, 0.3 s or longer, based on the driver's operation information read in step S103, the process proceeds to step S122, and if not, the process proceeds to step S123.

In step S122, the following variable is set and the process proceeds to step S128 in the same manner as in step S110.

$$\text{Long pressing acceleration} = -0.15\ \text{G}$$

In this way, issuing a constant command through the long pressing enables the driver to easily understand the future situation.

In the next step S123, if it is detected that there is no button operation this time and the button operation up to the last time is pressing down button 13 for a long time based on the driver's operation information read in step S103, the process proceeds to step S124.

In step S124, the following variable is set and the process proceeds to step S125.

$$\text{Long pressing acceleration} = 0\ \text{G}$$

In step S125, in the same manner as in step S106, if the preceding vehicle information read in step S102 indicates that the vehicle is not currently following the preceding vehicle, that is, that preceding vehicle is absent or the inter-vehicle distance to the preceding vehicle is equal to or longer than the predetermined distance, the process proceeds to step S126, and if not, the process proceeds to step S127.

In step S126, the following variable is set, and the process proceeds to step S128.

$$\text{Target vehicle speed} = \text{current traveling vehicle speed}$$

In step S127, the following variable is set, and the process proceeds to step S128.

$$\text{Target inter-vehicle interval} = \text{current inter-vehicle time with the preceding vehicle}$$

In step S128, if the driver's operation information read in step S103 indicates a state in which the current travel support control is turned off, the process proceeds to step S129, and if not, the process proceeds to step S130.

In step S129, the following variable is set to the acceleration command corresponding to the control command calculated by the travel support control, and the process proceeds to step S133.

$$\text{Acceleration command} = 0\ \text{G}$$

In step S130, if the preceding vehicle information read in step S102 indicates that the vehicle is not currently following the preceding vehicle, that is, that preceding vehicle is absent or the inter-vehicle distance to the preceding vehicle is equal to or longer than the predetermined distance, the process proceeds to step S131, and if not, the process proceeds to step S132.

In step S131, using the target vehicle speed obtained before this step, a calculation is executed to obtain an acceleration command for bringing the traveling speed of the own vehicle closer to the target vehicle speed, and the process proceeds to step S133.

In step S132, using the target inter-vehicle interval obtained before this step, a calculation is executed to obtain an acceleration command for bringing the inter-vehicle interval between the vehicle and the preceding vehicle closer to the target inter-vehicle interval, and the process proceeds to step S133.

In step S133, the target acceleration, which is the final output of the travel support control system, is calculated by arbitration the acceleration command and the long pressing acceleration obtained before this step.

Then, the target acceleration is calculated by the following expression.

<Example 1 of arbitration method>

if (button operation = long pressing of up button) then {target acceleration = long pressing acceleration}
if (button operation = long pressing of down button) then {target acceleration = long pressing acceleration}
if (button operation = other than long pressing) then {target acceleration = acceleration command}

Here, if (condition) then (expression) is a function that implements the expression if the condition is satisfied.

In such a control method, during the implementation of inter-vehicle interval control and vehicle speed control, priority is given to the acceleration command (long pressing acceleration) set by the driver's button operation, which is a value greater than the normal acceleration command obtained by those control calculations. This can directly reflect the intention of the driver, and it is possible to suppress discomfort of the operation.

Alternatively, the target acceleration is calculated by the following expression.

<Example 2 of arbitration method>

if (button operation = long pressing of up button) then {target acceleration = select_H (acceleration command, long pressing acceleration)}
if (button operation = long pressing of down button) then {target acceleration = select_L (acceleration command, long pressing acceleration)}
if (button operation = other than long pressing) then {target acceleration = acceleration command}

Here, select H (variable 1, variable 2) is a function that selects the greater of variable 1 and variable 2.

Similarly, select L (variable 1, variable 2) is a function that selects the smaller of variable 1 and variable 2.

In such a control method, during the implementation of inter-vehicle interval control or vehicle speed control, a comparison is performed between the acceleration command obtained by the control calculation and the acceleration command (long pressing acceleration) set by the driver's button operation, for a selection of the command that can more strongly implement the driver's desire about acceleration/deceleration, and thus, it is possible to suppress discomfort in the operation.

In the next step S134, the target acceleration is output to VMC 22 in the subsequent stage.

In the following step S135, the past value is updated and the process ends. For example, the button operation this time is stored in a static memory or the like so that it can be used as a past value in the next 50 ms process.

Next, the vehicle control method according to a second embodiment of the present invention will be described in detail with reference to the flowcharts of FIGS. 10 to 14.

The second embodiment is executed in the following steps S201 to S241, and is an example in which a target value setting by pedal operation is combined with the first embodiment.

Since steps S201 to S227 are the same as steps S101 to S127 in the first embodiment, detailed description thereof is omitted.

In step S228, if it is detected that there is no pedal operation this time but the pedal operation up to the last time is [accelerator] based on the state of the accelerator pedal operation, which is included in the driver's operation information read in step S203, the process proceeds to step S230, and if not, the process proceeds to step S229.

In step S229, if it is detected that there is no pedal operation this time but the pedal operation up to the last time is [brake] based on the state of the brake pedal operation, which is included in the driver's operation information read in step S203, the process proceeds to step S230, and if not, the process proceeds to step S234.

In the next step S230, the following variable is set and the process proceeds to step S231.

$$\text{Long pressing acceleration} = 0\ \text{G}$$

In this way, considering the pedal operation can eliminate the operation of the control system and can give priority to the driver operation. Thus, it is possible to suppress discomfort for the driver.

Since subsequent steps S231 to S233 are the same as steps S113 to S115 in the first embodiment, detailed description thereof is omitted.

In addition, since steps S234 to S238 are the same as steps S128 to S132 in the first embodiment, detailed description thereof is also omitted.

In the next step S239, the target acceleration, which is the final output of the travel support control system, is calculated by arbitration between the acceleration command and the long pressing acceleration obtained before this step.

Then, the target acceleration is calculated by the following expression.

<Example 3 of arbitration method>

if (pedal operation this time = yes) then {target acceleration = zero}
else if (button operation = long pressing of up button) then {target acceleration = long pressing acceleration}
else if (button operation = long pressing of down button) then {target acceleration = long pressing acceleration)}
else {target acceleration = acceleration command}

Here, if (condition 1) then (expression 1) else if (condition 2) then (expression 2) else (expression 3) is a function where: expression 1 is implemented if condition 1 is satisfied, otherwise expression 2 is implemented if condition 2 is satisfied, and expression 3 is implemented if neither of these conditions correspond.

In such a control method, with step S239, the target setting of the travel support control can be implemented not only by the button but also by the pedal. This allows the way of use such that: the target of the control system is set by the pedals in areas where the driver mainly frequently drives, such as narrow streets like alleys; and the target of the control system is set by the buttons when the system mainly frequently drives as on highways. This enables an easy-to-use operation system (HMI: Human Machine Interface) that is suitable for the road conditions and driving style and has less sense of discomfort.

Moreover, since the order of if-else determines the pedal to be at the higher level, the pedal operation is prioritized when the button operation and the pedal operation are performed at the same time, and thus, it is possible to suppress discomfort. This is because the driving operation by the pedal is the same operation as the manual driving by the normal driver himself/herself, and prioritizing the same operation as the manual driving leads to more ease.

In addition, although a plurality of buttons are installed at adjacent positions, the pedals are designed to have a step in front and rear between the accelerator and the brake, thereby preventing mistakes in operation. This also contributes to suppressing discomfort of simultaneous operation.

Subsequent steps S240 to S241 are the same as steps S134 to S135 in the first embodiment, and thus detailed description thereof is omitted.

As described above, according to the present invention, the inter-vehicle interval and the vehicle speed can be changed with two switches for acceleration and deceleration (the up button and down button) through the way of operating switches, specifically a single shot or a long pressing, depending on the presence/absence of the preceding vehicle, and the distance thereto. This configuration leads to easy understanding with the only two buttons, and allows quick reactions also in acceleration or deceleration. This can make operation of the switches intuitive and readily understandable, and can directly convey the intention of the passenger, such as acceleration and deceleration, and decrease and increase of the inter-vehicle interval, to the vehicle depending on the way of operating two switches, which enables the vehicle to react quickly, and thus, it is possible to suppress discomfort.

The configurations, control methods, and the like described in each of the above embodiments are merely schematically illustrated to the extent that the present invention can be understood and implemented. Therefore, the present invention is not limited to each of the described embodiments, and can be changed to various forms as long as it does not deviate from the scope of the technical idea indicated in the claims.

For example, various switches that are rotated or pulled can be applied to the system switch, the up button, and the down button of the adjusting unit, instead of the push button type switch. In addition, although the adjusting unit is installed at the steering wheel, it is of course possible to install it at another place such as a steering column or a dashboard.

Furthermore, the adjusting unit may be of a type in which an external terminal (smartphone or the like) is connected instead of the switch mounted on the vehicle. In the case of a smartphone, the "way" of operation can be using the pressing pressure.

Furthermore, gesture control, voice control, joystick, line-of-sight guidance, and the like can be applied to the adjusting unit. In the case of gesture control and voice control, a sensor for detecting movement and a voice input microphone act as adjusting units. In the case of joystick, the operation handle is used as the adjusting unit. In the case of line-of-sight guidance, a sensor (camera) or the like that detects the line of sight corresponds to the adjusting unit.

What can be considered as the "way" of operation are: the speed of movement in the case of gesture control; the vocalization time, volume, words, and the like in the case of voice control; the operation amount and operation time of the operation handle in the case of joystick; and the time spent on eye movement and the like in the case of line-of-sight guidance.

REFERENCE SYMBOL LIST

10 adjusting unit

11 system switch

12 up button (acceleration adjusting unit)

13 down button (deceleration adjusting unit)

20 control unit

21 travel support controller

22 VMC

23 calculation unit

24 processing unit

30 vehicle speed sensor

40 preceding vehicle sensor

50 accelerator pedal sensor

60 brake pedal sensor

100 vehicle

110 brake

120 engine

130 engine controller

140 brake controller

150 steering wheel

160 engine system

170 brake system

SA detection signal

SB detection signal

SU acceleration command

SD deceleration command

SE signal indicating presence/absence of preceding vehicle and inter-vehicle interval between own vehicle and preceding vehicle

SF braking/driving command

Sfa driving command

Sfb braking command

SP vehicle speed signal

SS support request signal

## Claims

**1.** A vehicle control device, comprising

a control unit that performs a calculation, based on input information, for changing at least one of a target vehicle speed of a vehicle and a target inter-vehicle interval between the vehicle and a preceding vehicle traveling in front of the vehicle,
wherein the control unit:

changes at least one of the target vehicle speed and the target inter-vehicle interval depending on input follow-up information relating to following of the preceding vehicle and input operation information relating to a way of operating an adjusting unit by passengers of the vehicle; and
outputs a control command for controlling a braking driving device to achieve the changed target vehicle speed or the changed target inter-vehicle interval, the braking/driving device breaking or driving the vehicle.

**2.** The vehicle control device according to claim 1, wherein

the adjusting unit is adjusted by a manual operation by the passenger, and
the control unit obtains the operation information from the adjusting unit.

**3.** The vehicle control device according to claim 2, wherein the operation information is information relating to operation time.

**4.** The vehicle control device according to claim 3, wherein
when the information relating to the operation time is shorter than a predetermined time, the control unit:

changes the target vehicle speed by a predetermined vehicle speed when an inter-vehicle interval between the vehicle and the preceding vehicle is detected to be greater than a predetermined threshold value based on the follow-up information; and
changes the target inter-vehicle interval by a predetermined inter-vehicle interval when the inter-vehicle interval between the vehicle and the preceding vehicle is detected to be equal to or smaller than the predetermined threshold value based on the follow-up information.

**5.** The vehicle control device according to claim 4, wherein

the adjusting unit includes an acceleration adjusting unit, and
when the control unit obtains the operation information from the acceleration adjusting unit, the control unit:

increases the target vehicle speed by the predetermined vehicle speed when the inter-vehicle interval is detected to be greater than the predetermined threshold value based on the follow-up information; and
decreases the target inter-vehicle interval by the predetermined inter-vehicle interval when the inter-vehicle interval is detected to be equal to or smaller than the predetermined threshold value based on the follow-up information.

**6.** The vehicle control device according to claim 4, wherein

the adjusting unit includes a deceleration adjusting unit, and
when the control unit obtains the operation information from the deceleration adjusting unit, the control unit:

decreases the target vehicle speed by the predetermined vehicle speed when the inter-vehicle interval is detected to be greater than the predetermined threshold value based on the follow-up information; and
increases the target inter-vehicle interval by the predetermined inter-vehicle interval when the inter-vehicle interval is detected to be equal to or smaller than the predetermined threshold value based on the follow-up information.

**7.** The vehicle control device according to claim 3, wherein
when the information relating to the operation time is equal to or longer than a predetermined time, the control unit:

outputs a command for acceleration/deceleration by a predetermined amount to the braking/driving device when an inter-vehicle interval between the vehicle and the preceding vehicle is detected to be greater than a predetermined threshold value based on the follow-up information, and changes the target vehicle speed to a vehicle speed at the time when operation of the adjusting unit ends; and
outputs a command for acceleration/deceleration by the predetermined amount to the braking/driving device when the inter-vehicle interval between the vehicle and the preceding vehicle is detected to be equal to or smaller than the predetermined threshold value based on the follow-up information, and changes the target inter-vehicle interval to an inter-vehicle interval at the time when operation of the adjusting unit ends.

**8.** The vehicle control device according to claim 3, wherein

the adjusting unit includes a button type switch, and
the information relating to time is information relating to pressing time of the button.

**9.** The vehicle control device according to claim 2, wherein

the adjusting unit includes a button type switch, and

the operation information is information relating to a way of pressing the button.

**10.** The vehicle control device according to claim 1, wherein

the vehicle is equipped with a pedal for acceleration/deceleration operation of the vehicle, and
the control unit obtains the operation information from the adjusting unit independently of operation of the pedal by the passenger, the adjusting unit adjusting at least one of the target vehicle speed and the target inter-vehicle interval.

**11.** The vehicle control device according to claim 10, wherein
in a state in which both operation of the adjusting unit and operation of the pedal by the passenger are performed, the control unit:

changes at least one of the target vehicle speed and the target inter-vehicle interval depending on input information relating to following of the preceding vehicle and information relating to operation of the pedal by the passenger of the vehicle; and
outputs a control command for controlling the braking/driving device to achieve the changed target vehicle speed or the changed target inter-vehicle interval.

**12.** A vehicle control method for changing at least one of a target vehicle speed of a vehicle and a target inter-vehicle interval between a vehicle and a preceding vehicle traveling in front of the vehicle based on input information, the method comprising:

changing at least one of the target vehicle speed and the target inter-vehicle interval depending on obtained information relating to following of the preceding vehicle and obtained information relating to a way of operating an adjusting unit by a passenger of the vehicle; and
outputting a control command for controlling a braking/driving device to achieve the changed target vehicle speed or the changed target inter-vehicle interval, the braking/driving device breaking or driving the vehicle.

**13.** A vehicle control system comprising:

an adjusting unit with which a passenger adjusts at least one of a target vehicle speed of a vehicle and a target inter-vehicle interval between the vehicle and a preceding vehicle traveling in front of the vehicle;
a control unit that changes at least one of the target vehicle speed and the target inter-vehicle interval depending on input information relating to following of the preceding vehicle and input information relating to a way of operating the adjusting unit by the passenger of the vehicle and outputs a control command for achieving the changed target vehicle speed or the changed target inter-vehicle interval; and
a braking and driving device that obtains the control command output from the control unit and breaks or drives the vehicle based on the control command.

FIG.1

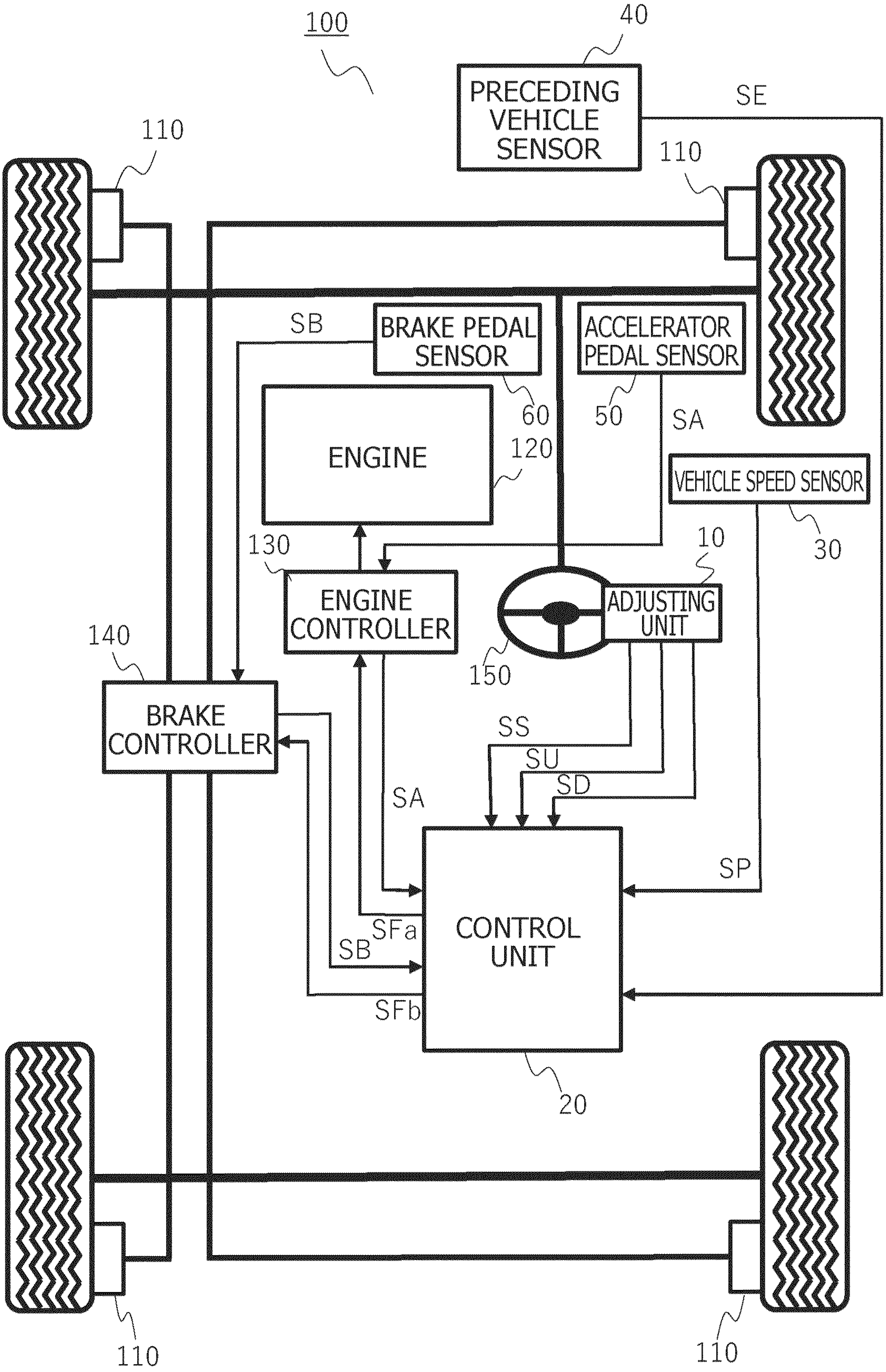
100
40
PRECEDING VEHICLE SENSOR
SE
110
BRAKE PEDAL SENSOR
ACCELERATOR PEDAL SENSOR
SB
60
50
SA
ENGINE
120
VEHICLE SPEED SENSOR
30
130
10
ENGINE CONTROLLER
ADJUSTING UNIT
150
140
BRAKE CONTROLLER
SS
SU
SD
SA
SP
CONTROL UNIT
SFa
SB
SFb
20
110
110

FIG.2

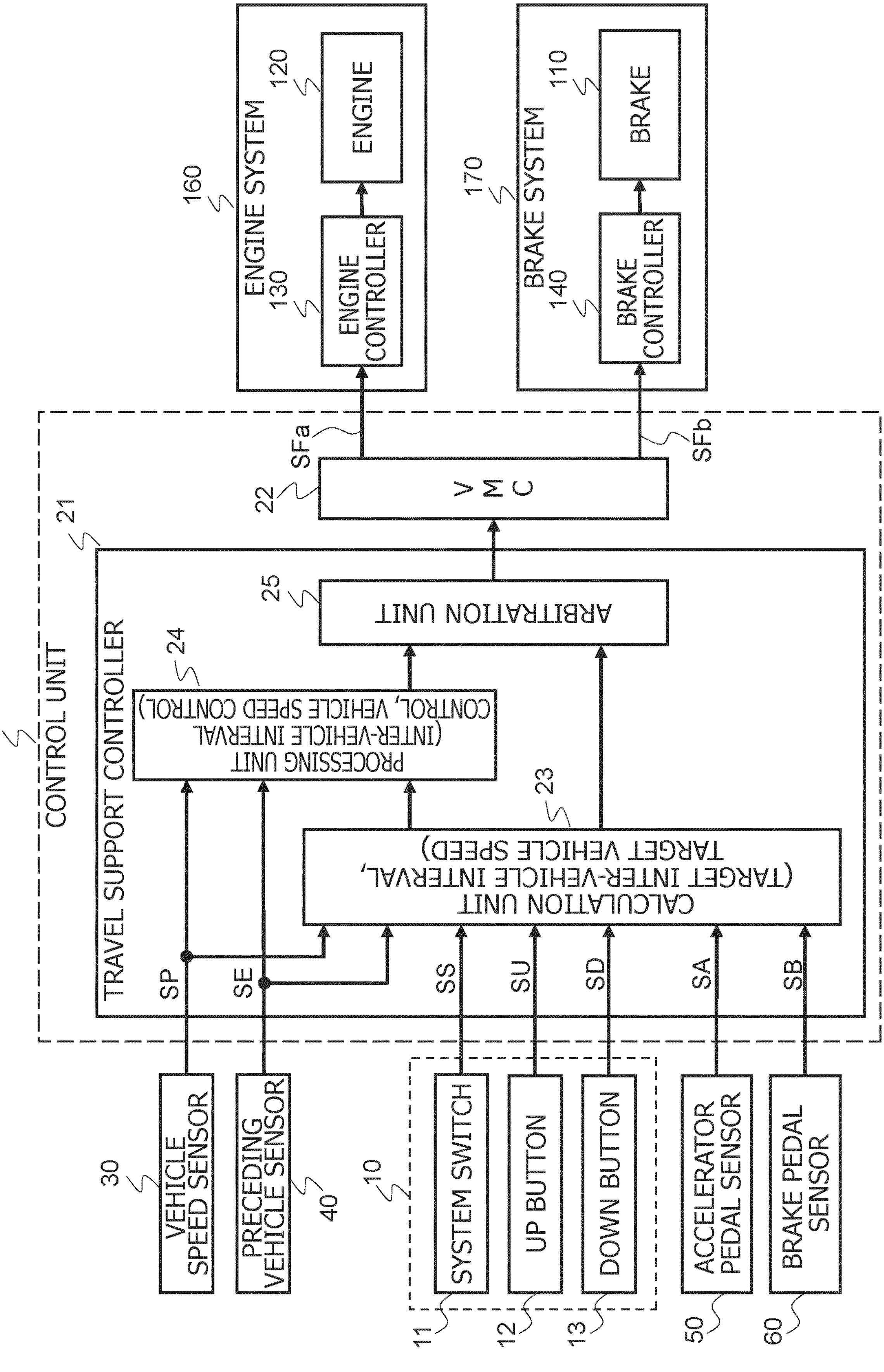
CONTROL UNIT
20
TRAVEL SUPPORT CONTROLLER
21
VMC
22
CALCULATION UNIT (TARGET INTER-VEHICLE INTERVAL, TARGET VEHICLE SPEED)
23
PROCESSING UNIT (INTER-VEHICLE INTERVAL CONTROL, VEHICLE SPEED CONTROL)
24
ARBITRATION UNIT
25
ENGINE SYSTEM
160
ENGINE CONTROLLER
130
ENGINE
120
BRAKE SYSTEM
170
BRAKE CONTROLLER
140
BRAKE
110
SFa
SFb
SP
SE
SS
SU
SD
SA
SB
VEHICLE SPEED SENSOR
30
PRECEDING VEHICLE SENSOR
40
10
SYSTEM SWITCH
11
UP BUTTON
12
DOWN BUTTON
13
ACCELERATOR PEDAL SENSOR
50
BRAKE PEDAL SENSOR
60

FIG.3A

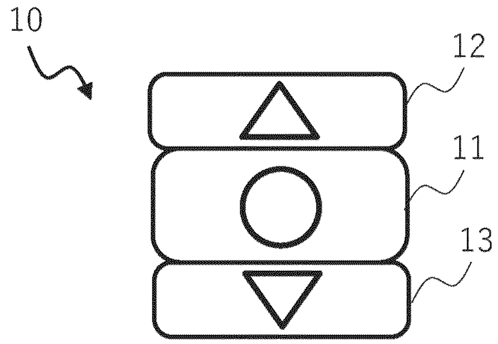


FIG.3B

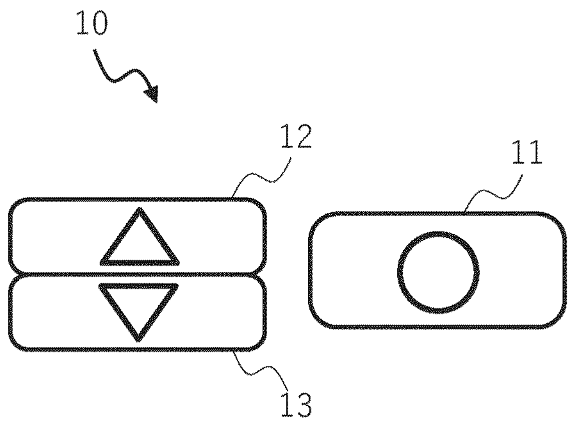

# FIG.4

| BUTTON OPERATION | | PRECEDING VEHICLE = ABSENT, OR FAR AWAY | PRECEDING VEHICLE = FOLLOWING |
|---|---|---|---|
| UP BUTTON | SHORT PRESSING (SINGLE SHOT) | TARGET VEHICLE SPEED + 5 KM/H | TARGET INTER-VEHICLE INTERVAL - 0.1 S |
| | LONG PRESSING | 0.15 G ACCELERATION | |
| | | VEHICLE SPEED AFTER LONG PRESSING = TARGET VEHICLE SPEED | INTER-VEHICLE DISTANCE AFTER LONG PRESSING = TARGET INTER-VEHICLE INTERVAL |
| DOWN BUTTON | SHORT PRESSING (SINGLE SHOT) | TARGET VEHICLE SPEED - 5 KM/H | TARGET INTER-VEHICLE INTERVAL + 0.1 S |
| | LONG PRESSING | 0.15 G DECELERATION | |
| | | VEHICLE SPEED AFTER LONG PRESSING = TARGET VEHICLE SPEED | INTER-VEHICLE DISTANCE AFTER LONG PRESSING = TARGET INTER-VEHICLE INTERVAL |

FIG.5

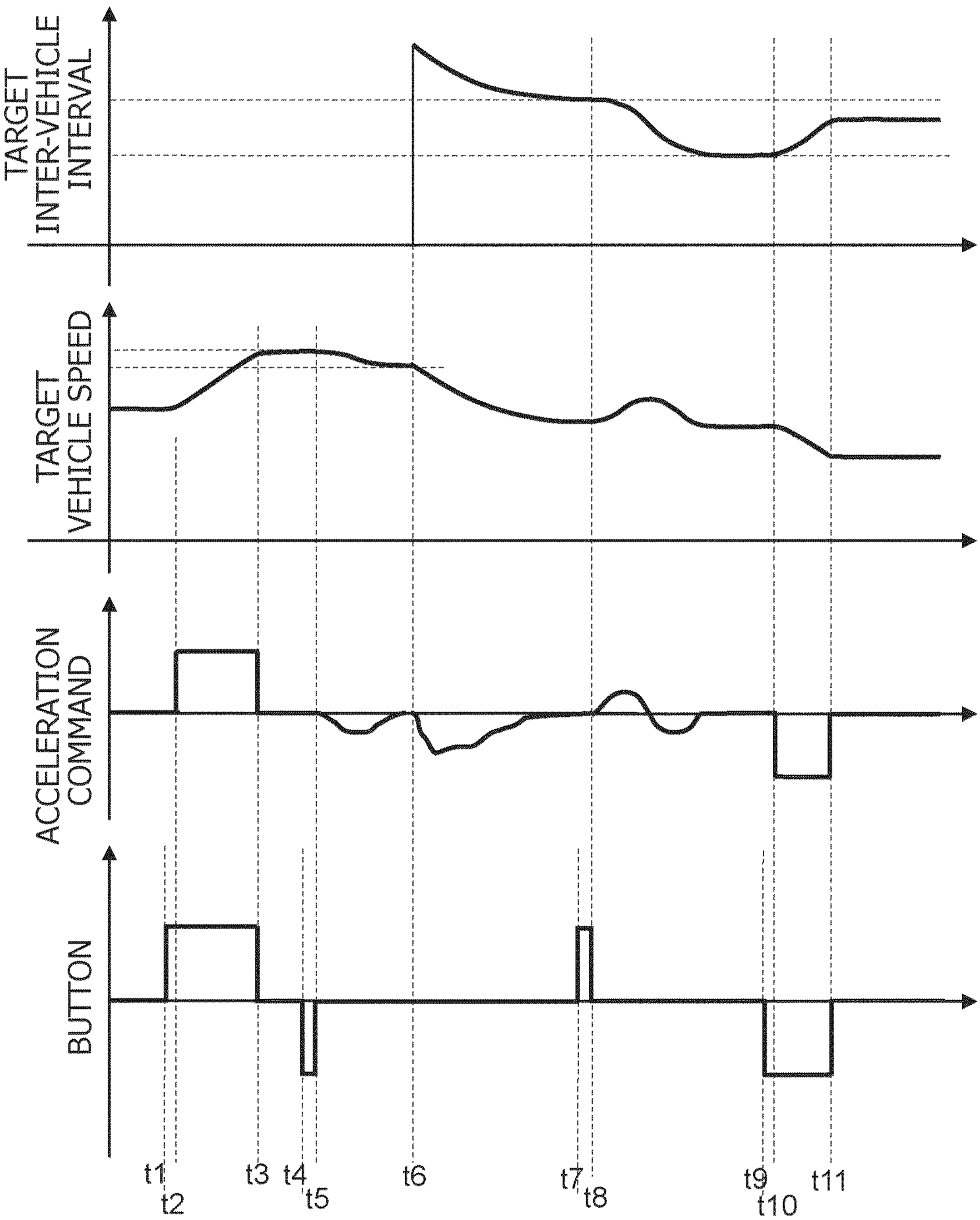
TARGET
INTER-VEHICLE
INTERVAL
TARGET
VEHICLE SPEED
ACCELERATION
COMMAND
BUTTON
t1
t2
t3
t4
t5
t6
t7
t8
t9
t10
t11

FIG.6

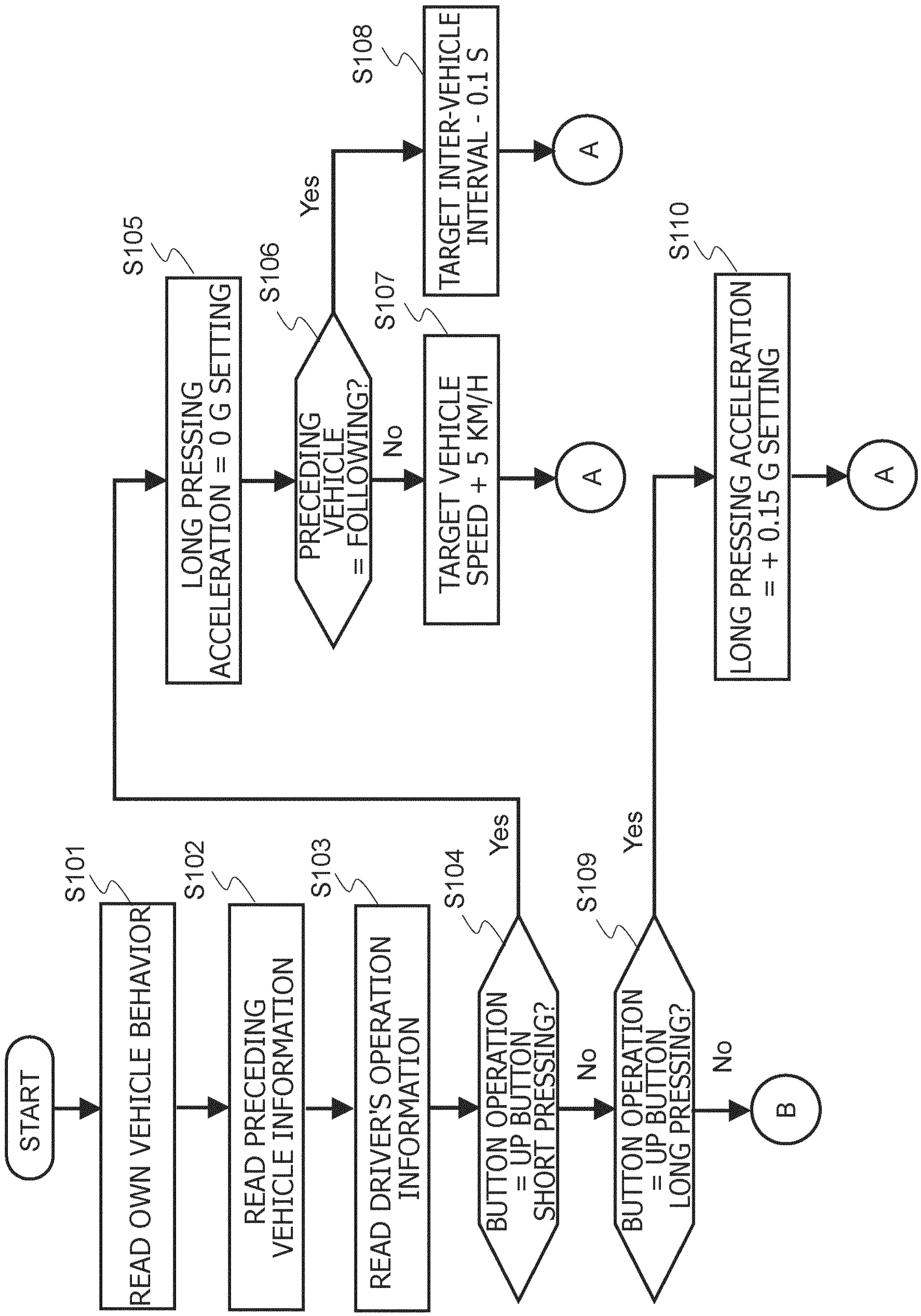
START
S101
READ OWN VEHICLE BEHAVIOR
S102
READ PRECEDING VEHICLE INFORMATION
S103
READ DRIVER'S OPERATION INFORMATION
S104
BUTTON OPERATION = UP BUTTON SHORT PRESSING?
Yes
No
S109
BUTTON OPERATION = UP BUTTON LONG PRESSING?
Yes
No
B
S105
LONG PRESSING ACCELERATION = 0 G SETTING
S106
PRECEDING VEHICLE = FOLLOWING?
Yes
No
S107
TARGET VEHICLE SPEED + 5 KM/H
A
S108
TARGET INTER-VEHICLE INTERVAL - 0.1 S
A
S110
LONG PRESSING ACCELERATION = + 0.15 G SETTING
A

FIG.7

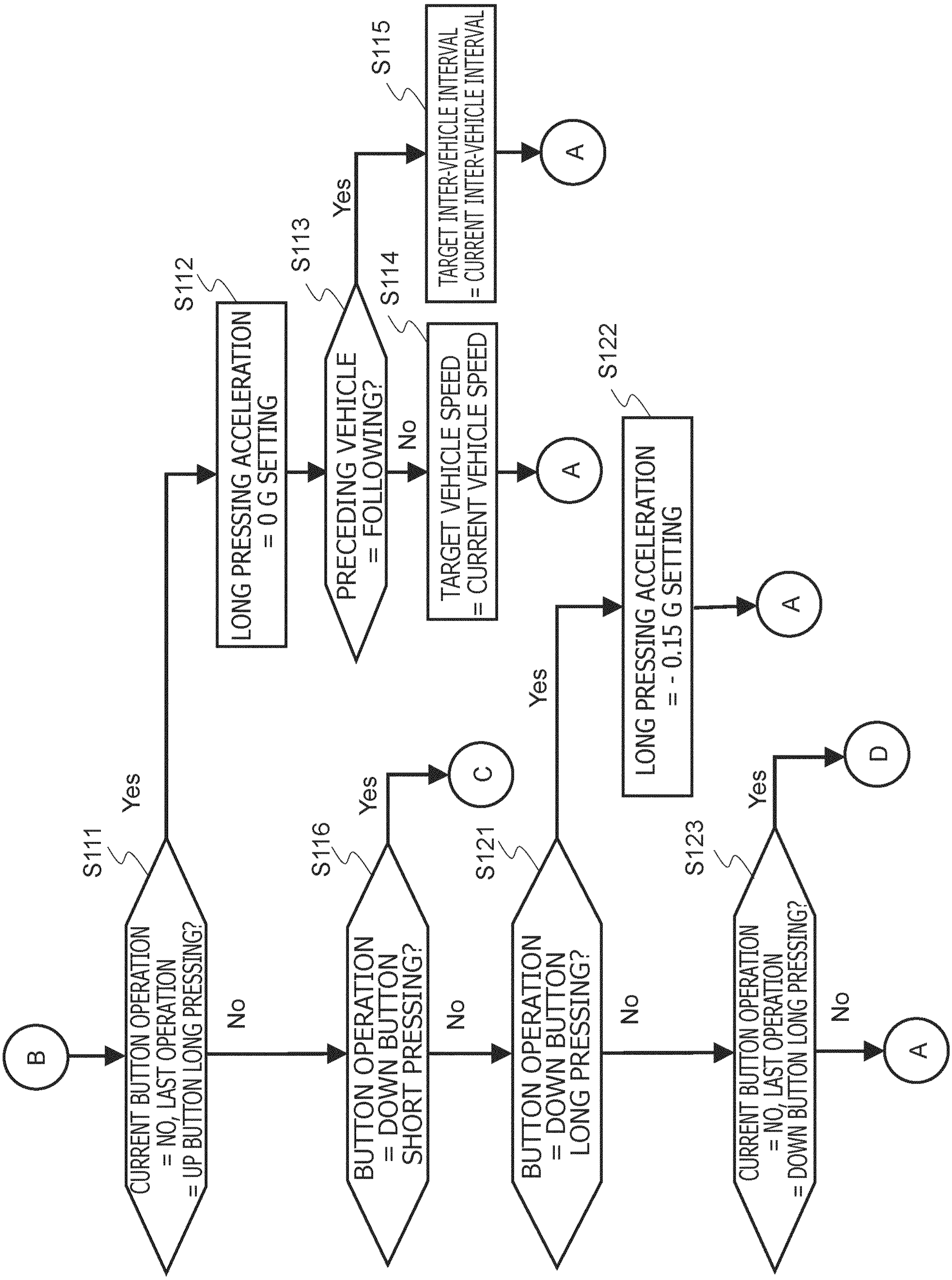
B
S111
CURRENT BUTTON OPERATION = NO, LAST OPERATION = UP BUTTON LONG PRESSING?
Yes
No
S112
LONG PRESSING ACCELERATION = 0 G SETTING
S113
PRECEDING VEHICLE = FOLLOWING?
Yes
No
S114
TARGET VEHICLE SPEED = CURRENT VEHICLE SPEED
A
S115
TARGET INTER-VEHICLE INTERVAL = CURRENT INTER-VEHICLE INTERVAL
A
S116
BUTTON OPERATION = DOWN BUTTON SHORT PRESSING?
Yes
C
No
S121
BUTTON OPERATION = DOWN BUTTON LONG PRESSING?
Yes
S122
LONG PRESSING ACCELERATION = - 0.15 G SETTING
A
No
S123
CURRENT BUTTON OPERATION = NO, LAST OPERATION = DOWN BUTTON LONG PRESSING?
Yes
D
No
A

FIG.8

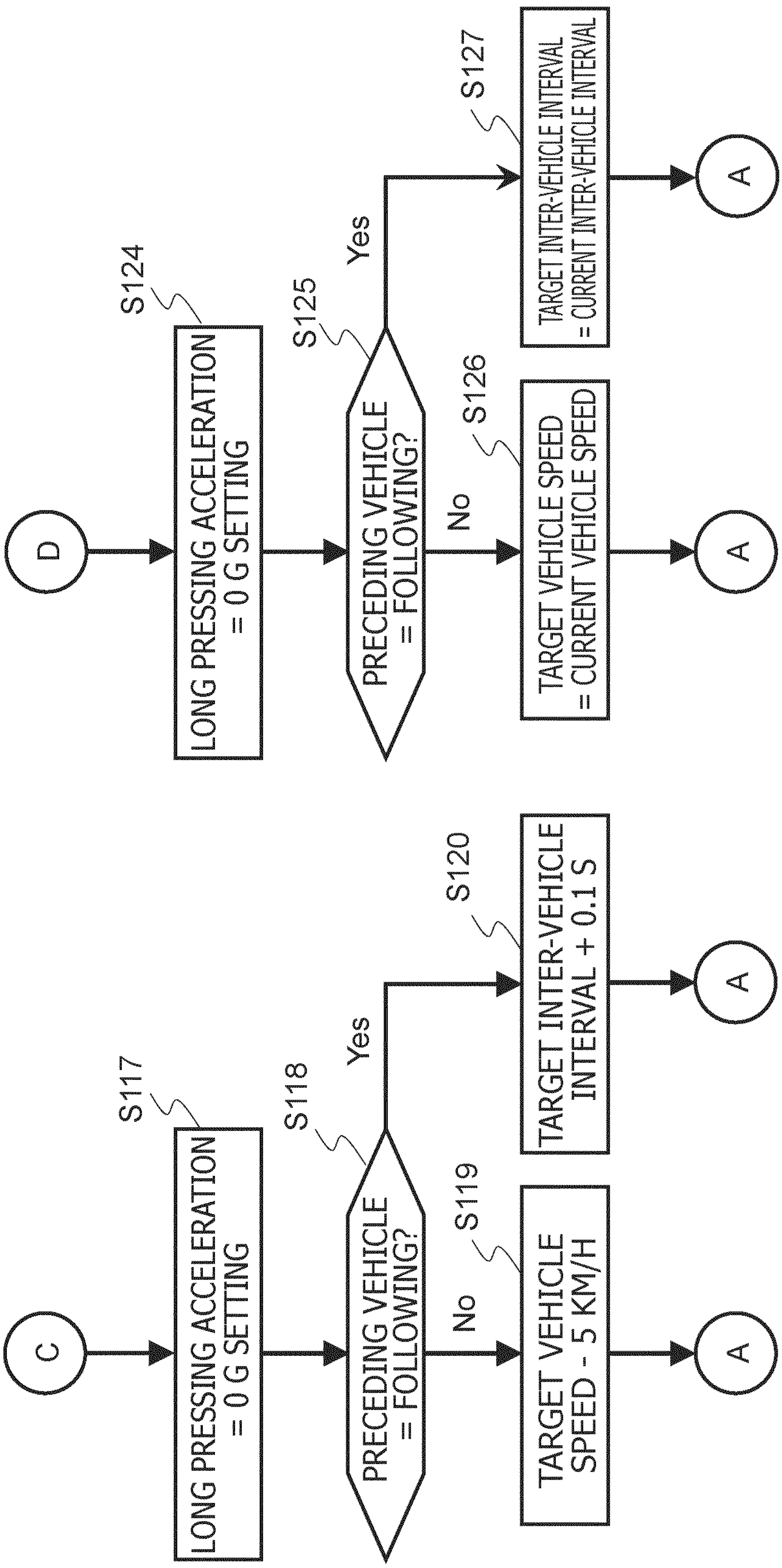
C
S117
LONG PRESSING ACCELERATION = 0 G SETTING
S118
PRECEDING VEHICLE = FOLLOWING?
Yes
No
S119
TARGET VEHICLE SPEED - 5 KM/H
S120
TARGET INTER-VEHICLE INTERVAL + 0.1 S
A
A
D
S124
LONG PRESSING ACCELERATION = 0 G SETTING
S125
PRECEDING VEHICLE = FOLLOWING?
Yes
No
S126
TARGET VEHICLE SPEED = CURRENT VEHICLE SPEED
S127
TARGET INTER-VEHICLE INTERVAL = CURRENT INTER-VEHICLE INTERVAL
A
A

FIG.9

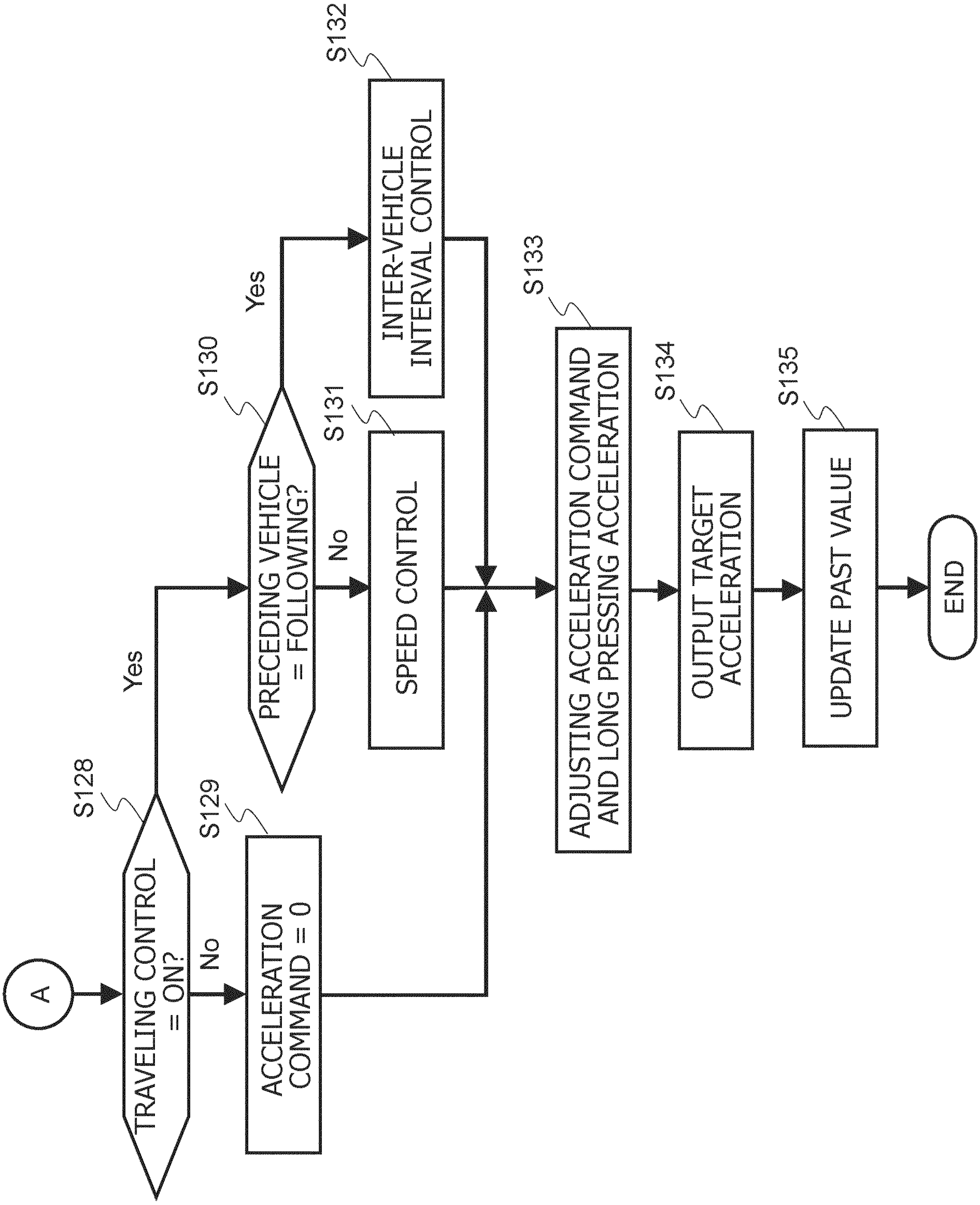
A
TRAVELING CONTROL = ON?
S128
No
Yes
ACCELERATION COMMAND = 0
S129
PRECEDING VEHICLE = FOLLOWING?
S130
No
Yes
SPEED CONTROL
S131
INTER-VEHICLE INTERVAL CONTROL
S132
ADJUSTING ACCELERATION COMMAND AND LONG PRESSING ACCELERATION
S133
OUTPUT TARGET ACCELERATION
S134
UPDATE PAST VALUE
S135
END

FIG.10

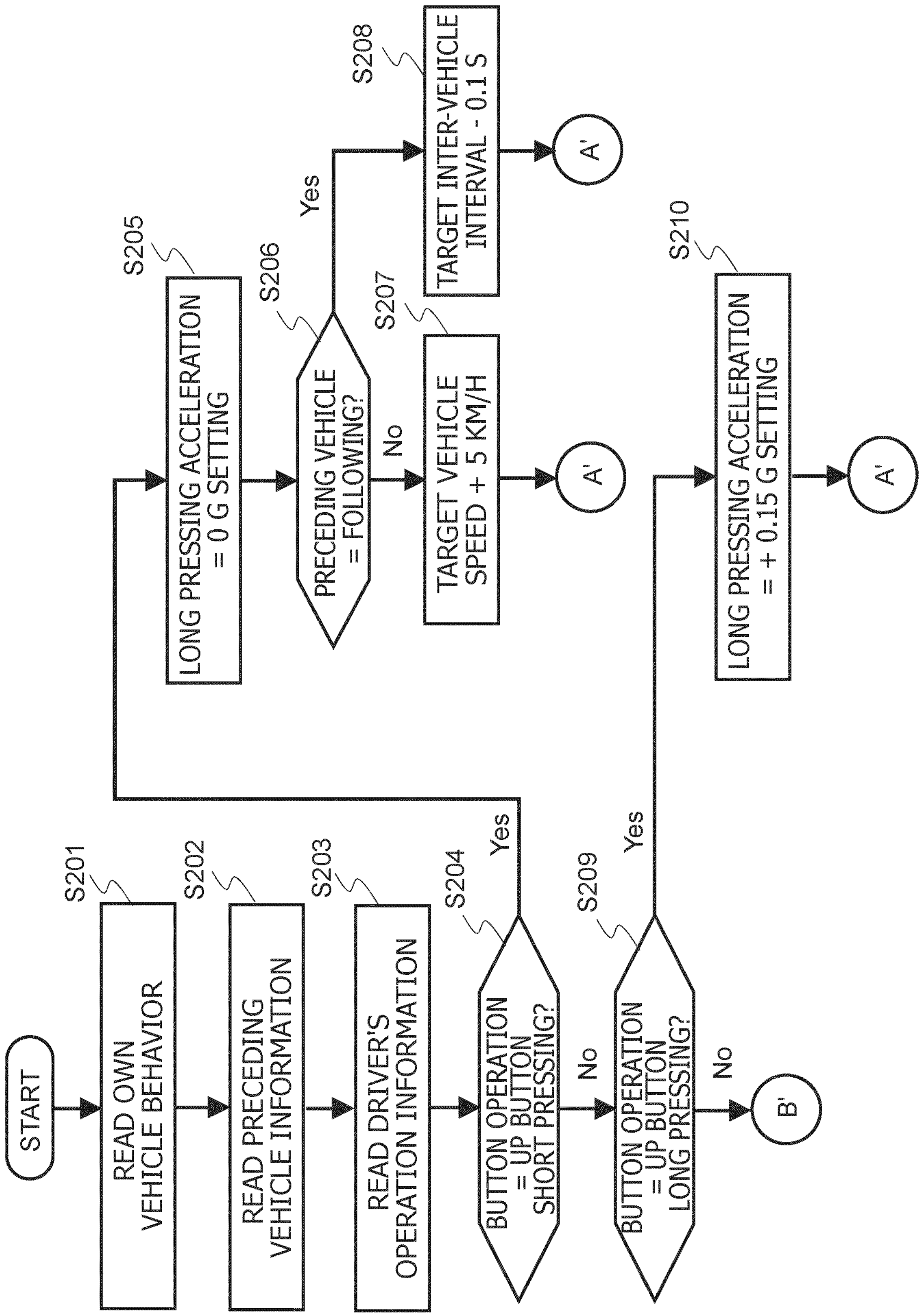
START
S201
READ OWN VEHICLE BEHAVIOR
S202
READ PRECEDING VEHICLE INFORMATION
S203
READ DRIVER'S OPERATION INFORMATION
S204
BUTTON OPERATION = UP BUTTON SHORT PRESSING?
Yes
No
S209
BUTTON OPERATION = UP BUTTON LONG PRESSING?
Yes
No
B'
S205
LONG PRESSING ACCELERATION = 0 G SETTING
S206
PRECEDING VEHICLE = FOLLOWING?
Yes
No
S207
TARGET VEHICLE SPEED + 5 KM/H
A'
S208
TARGET INTER-VEHICLE INTERVAL - 0.1 S
A'
S210
LONG PRESSING ACCELERATION = + 0.15 G SETTING
A'

FIG.11

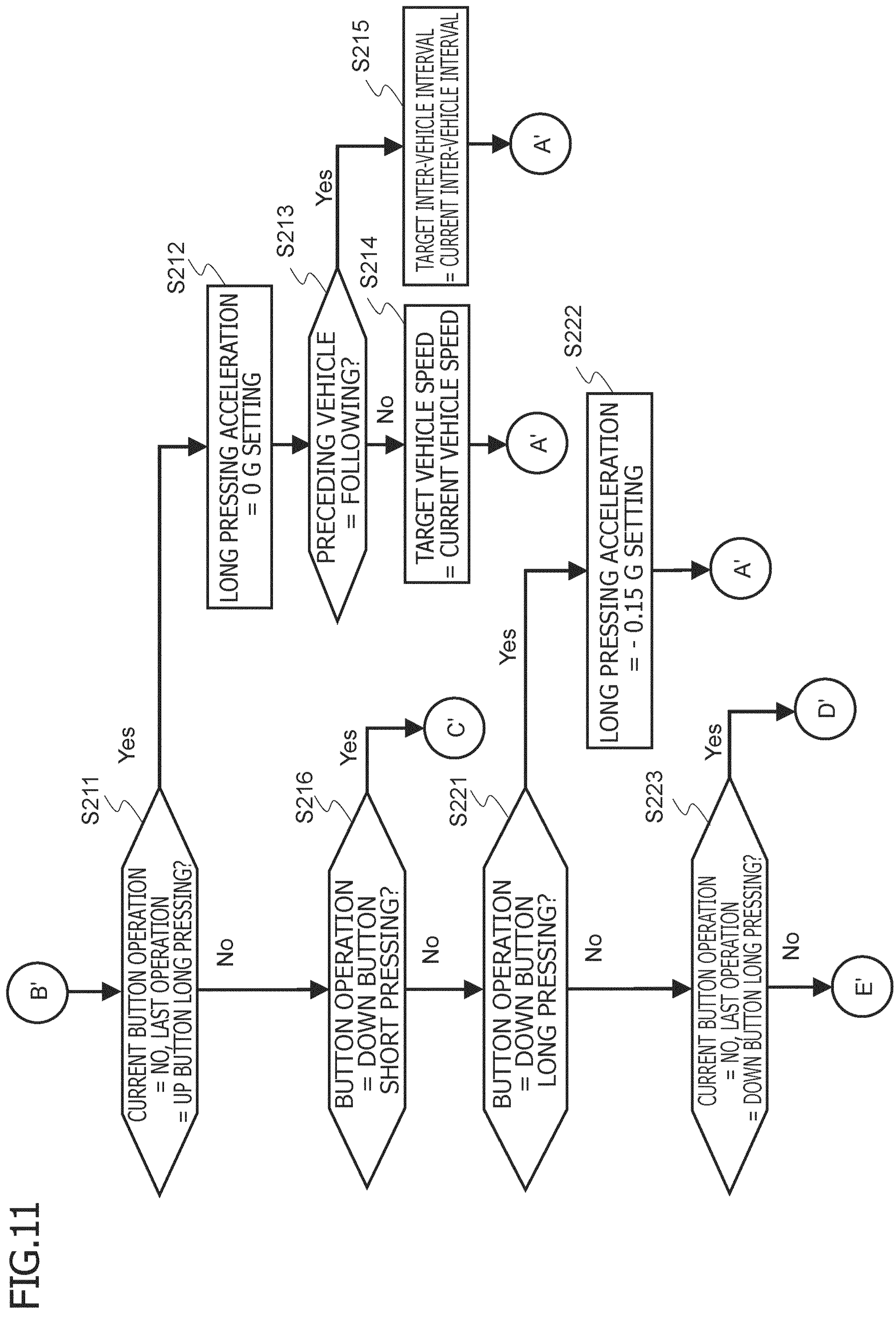
B'
S211
CURRENT BUTTON OPERATION = NO, LAST OPERATION = UP BUTTON LONG PRESSING?
Yes
No
S212
LONG PRESSING ACCELERATION = 0 G SETTING
S213
PRECEDING VEHICLE = FOLLOWING?
Yes
No
S214
TARGET VEHICLE SPEED = CURRENT VEHICLE SPEED
A'
S215
TARGET INTER-VEHICLE INTERVAL = CURRENT INTER-VEHICLE INTERVAL
A'
S216
BUTTON OPERATION = DOWN BUTTON SHORT PRESSING?
Yes
C'
No
S221
BUTTON OPERATION = DOWN BUTTON LONG PRESSING?
Yes
S222
LONG PRESSING ACCELERATION = - 0.15 G SETTING
A'
No
S223
CURRENT BUTTON OPERATION = NO, LAST OPERATION = DOWN BUTTON LONG PRESSING?
Yes
D'
No
E'

FIG.12

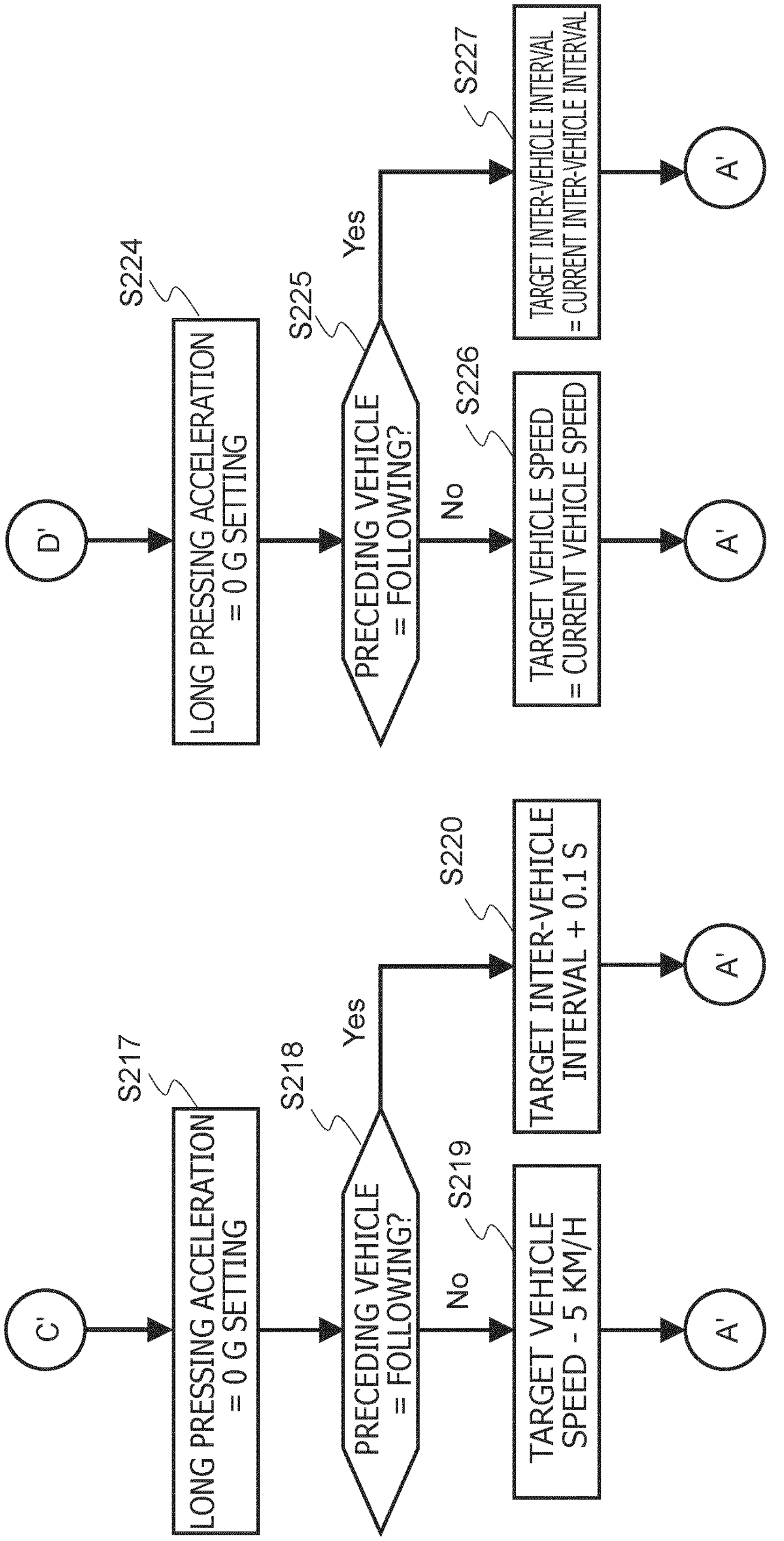
C'
LONG PRESSING ACCELERATION = 0 G SETTING
S217
PRECEDING VEHICLE = FOLLOWING?
S218
No
Yes
TARGET VEHICLE SPEED - 5 KM/H
S219
TARGET INTER-VEHICLE INTERVAL + 0.1 S
S220
A'
A'
D'
LONG PRESSING ACCELERATION = 0 G SETTING
S224
PRECEDING VEHICLE = FOLLOWING?
S225
No
Yes
TARGET VEHICLE SPEED = CURRENT VEHICLE SPEED
S226
TARGET INTER-VEHICLE INTERVAL = CURRENT INTER-VEHICLE INTERVAL
S227
A'
A'

FIG.13

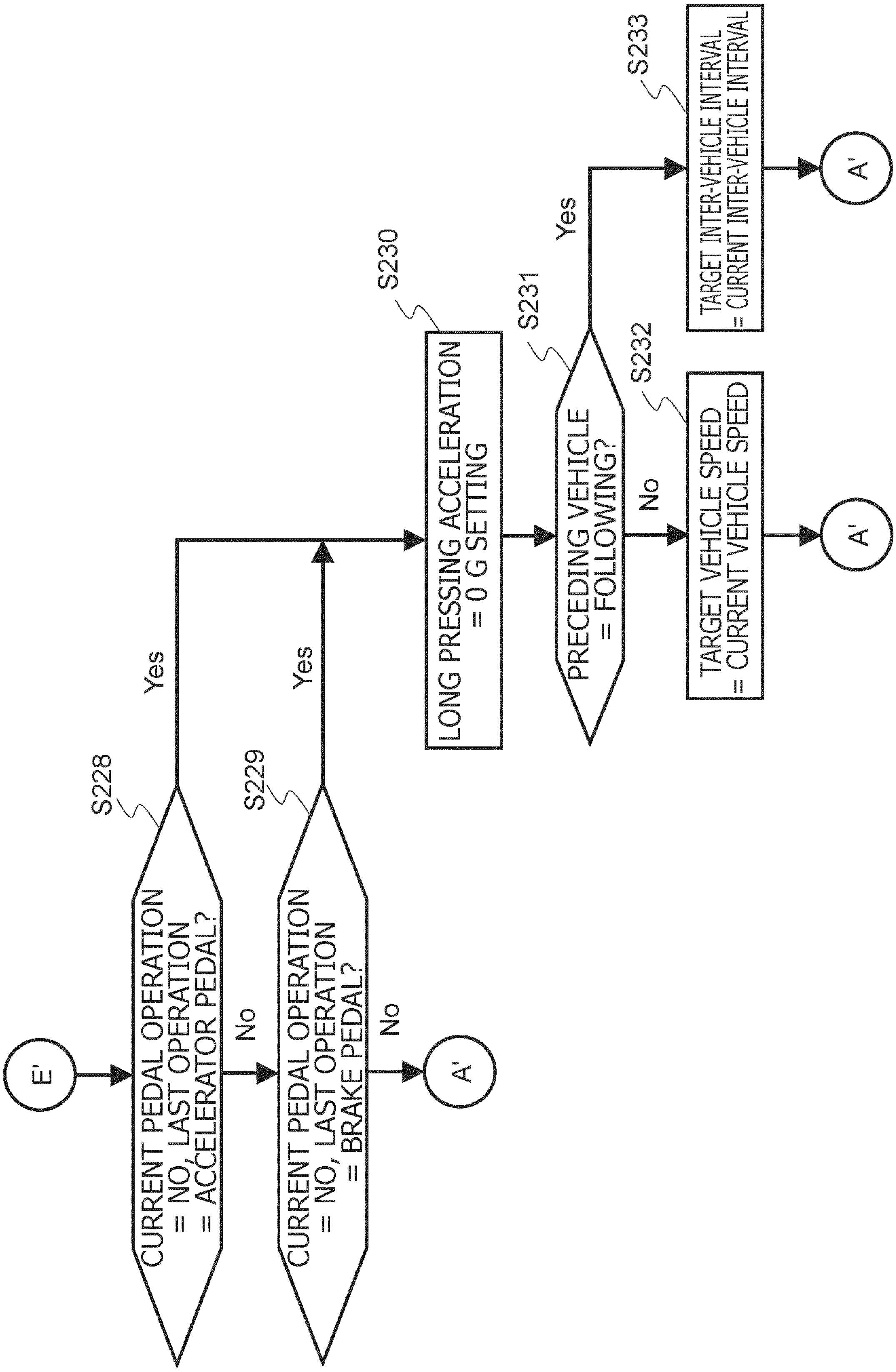
E'
S228
CURRENT PEDAL OPERATION = NO, LAST OPERATION = ACCELERATOR PEDAL?
No
Yes
S229
CURRENT PEDAL OPERATION = NO, LAST OPERATION = BRAKE PEDAL?
No
A'
Yes
S230
LONG PRESSING ACCELERATION = 0 G SETTING
S231
PRECEDING VEHICLE = FOLLOWING?
No
S232
TARGET VEHICLE SPEED = CURRENT VEHICLE SPEED
A'
Yes
S233
TARGET INTER-VEHICLE INTERVAL = CURRENT INTER-VEHICLE INTERVAL
A'

FIG.14

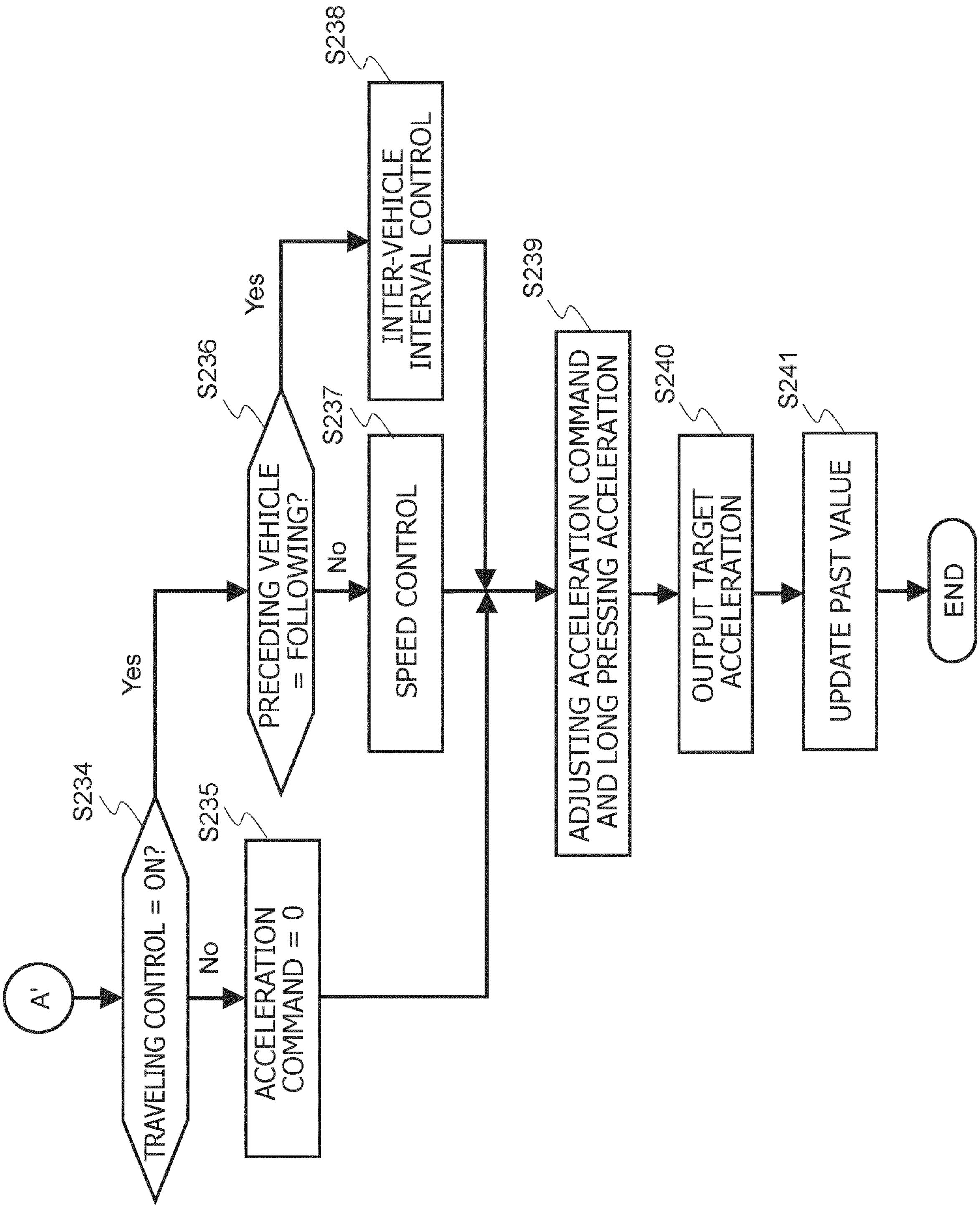
A'
S234
TRAVELING CONTROL = ON?
No
Yes
S235
ACCELERATION COMMAND = 0
S236
PRECEDING VEHICLE = FOLLOWING?
No
Yes
S237
SPEED CONTROL
S238
INTER-VEHICLE INTERVAL CONTROL
S239
ADJUSTING ACCELERATION COMMAND AND LONG PRESSING ACCELERATION
S240
OUTPUT TARGET ACCELERATION
S241
UPDATE PAST VALUE
END

**INTERNATIONAL SEARCH REPORT**

International application No. PCT/JP2020/019582

A. CLASSIFICATION OF SUBJECT MATTER
Int.Cl. B60W30/16(2020.01)i, B60W50/10(2012.01)i
FI: B60W30/16, B60W50/10

According to International Patent Classification (IPC) or to both national classification and IPC

B. FIELDS SEARCHED

Minimum documentation searched (classification system followed by classification symbols)
Int.Cl. B60W10/00-10/30, B60W30/00-60/00, G08G1/00-99/00, H01H13/00-13/88, G06F3/00-3/039

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2018-47795 A (TOYOTA MOTOR CORPORATION) 29.03.2018 (2018-03-29), paragraphs [0037]-[0071], [0152], fig. 1, 2 | 1-8, 10-13<br>9 |
| Y | JP 2010-126087 A (NISSAN MOTOR CO., LTD.) 10.06.2010 (2010-06-10), paragraphs [0009]-[0014], fig. 1, 2 | 9 |
| A | JP 2007-112359 A (MAZDA MOTOR CORP.) 10.05.2007 (2007-05-10), paragraphs [0002]-[0005], [0023]-[0029], fig. 1-4 | 1-13 |
| A | JP 2018-70040 A (TOYOTA MOTOR CORPORATION) 10.05.2018 (2018-05-10), paragraphs [0037]-[0073], fig. 1, 2 | 1-13 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31.07.2020 | 11.08.2020 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2020/019582

| | | |
|---|---|---|
| JP 2018-47795 A | 29.03.2018 | US 2018/0079411 A1<br>paragraphs [0077]-[0111], [0193], fig. 1, 2<br>EP 3299239 A1 |
| JP 2010-126087 A | 10.06.2010 | (Family: none) |
| JP 2007-112359 A | 10.05.2007 | (Family: none) |
| JP 2018-70040 A | 10.05.2018 | US 2018/0118208 A1<br>paragraphs [0058]-[0106], fig. 1, 2<br>EP 3315375 A1 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002178787 A